# EUROPÄISCHE PATENTSCHRIFT

(11) **EP 0 938 383 B1**
(45) Veröffentlichungstag und Bekanntmachung des Hinweises auf die Patenterteilung: **23.08.2000**
(21) Anmeldenummer: 97948839.2
(22) Anmeldetag: 30.10.1997
(51) Int. Cl.: B01L 3/00, G01N 35/02, C12M 1/38, C12Q 1/68

(54) **VORRICHTUNG ZUR DURCHFÜHRUNG VON UNTERSUCHUNGEN AN ZELLPROBEN UND DERGLEICHEN**
DEVICE FOR CARRYING OUT RESEARCH ON CELL SPECIMENS AND SIMILAR MATERIAL
DISPOSITIF POUR EFFECTUER DES ANALYSES D'ECHANTILLONS CELLULAIRES OU SIMILAIRES

(30) Priorität: 12.11.1996 DE 19646505
(43) Veröffentlichungstag der Anmeldung: 01.09.1999
(73) Patentinhaber: Micronas GmbH, 79108 Freiburg (DE)
(72) Erfinder: WOLF, Bernhard, D-79252 Stegen (DE); SIEBEN, Ulrich, D-79276 Reute (DE)
(74) Vertreter: Schmitt, Hans, Dipl.-Ing.
(86) Internationale Anmeldenummer: EP9705997
(87) Internationale Veröffentlichungsnummer: WO9820974

(56) Entgegenhaltungen:
- WO-A-96/01836
- DE-A- 3 915 920
- PATENT ABSTRACTS OF JAPAN vol. 012, no. 079 (P-676), 12.März 1988 & JP 62 217159 A (FUJI PHOTO FILM CO LTD), 24.September 1987,

## Beschreibung

Die Erfindung bezieht sich auf eine Vorrichtung zur Durchführung von Untersuchungen an Zellproben und dergleichen Proben, die eine Mikrotiterplatte oder dergleichen Aufnahmevorrichtung mit einer Vielzahl von Einzelbehältnissen für Zellproben aufweist, sowie mit einer Meßeinrichtung zum Erfassen von Veränderungen an den einzelnen Proben, wobei bei jedem Aufnahmebehältnis wenigstens ein Sensor vorgesehen ist.

Mit Hilfe von sogenannten Mikrotiterplatten können verschiedene medizinisch-biochemische Testverfahren durchgeführt werden. Mikrotiterplatten weisen eine Vielzahl von nebeneinander angeordneten Aufnahmeröhrchen auf, in die Zellproben, beispielsweise eine Suspension von Metastasenzellen eingegeben werden. Anschließend wird eine Indikatorlösung, beispielsweise ein Fluoreszenzfarbstoff hinzugefügt.
Zur Untersuchung, ob bestimmte Substanzen die Metastasenzellen beeinflussen, insbesondere abtöten können, werden verschiedene zytostoxische Substanzen zugegeben.
Das Eingeben der Zellproben, der Indikatorlösung und der Medikamente erfolgt in einer mittels Automat durchgeführten Beprobungstechnik. Zellveränderungen lassen sich im Durchlichtverfahren und mit Hilfe eines Spektrometers nachweisen.
Außer zur Chemotherapietestung können die Mikrotiterplatten auch zur Untersuchung von Krebszellen auf ihre Metastasierungstendenz hin untersucht werden. In diesem Falle wird in die Behältnisse ein Testsubstrat, bestehend aus einer Schicht aus Zellen oder embryonalen HM-Zellkulturen oder einer Kollagenmatrix aufgetragen, auf die dann die Metastasenzellen aufgebracht werden. Je nach Grad der Veränderung kann ein Maß für den Invasionsindex oder Metastasierungsindex abgeleitet werden. Dieses Verfahren, bei dem biologische Schichten von einer anderen Substanz mehr oder weniger beeinflußt werden, wird auch Biokorrosion genannt. Es sind damit auch Untersuchungen, zum Beispiel von Kunststoffen auf Biokompatibilität möglich, d.h. es wird untersucht, ob Zellen in diesen zu untersuchenden Kunststoff eindringen oder nicht.

Bei diesen vielfältigen Untersuchungen ist üblicherweise für die Auswertung ein Durchlichtverfahren vorgesehen, mit Meßauswertung durch einen Mikroplattenreader oder mittels eines Spektrometers. Es ist somit einerseits ein nicht unerheblicher, apparativer Aufwand für die funktionstüchtige Gesamtvorrichtung erforderlich und andererseits geben die Meßauswertungen nicht in allen Fällen in erwünschtem Maße Aufschluß, zum Beispiel auch über den laufenden Reaktionsprozeß. Nachteilig ist weiterhin, daß bei VerwendunghandelsüblicherMikrotiterplattenvergleichsweisegroße Probenmengen erforderlich sind. Nicht immer stehen aber entsprechende Probenmengen, beispielsweise von Biopsiematerial zur Verfügung.

Aus der DE 39 15 920 A ist eine Vorrichtung bekannt, die eine mikromechanische Struktur mit einer Vielzahl von in einem Block aus halbleitendem Material befindlichen Vertiefungen als Probenbehältnisse aufweist. Die Probenbehältnisse sind durch chemische Ätztechnik in den Block eingebracht. Diese Aufnahmen sind jedoch nur für sehr geringe Probenmengen geeignet. Außerdem sind spezielle Beprobungseinrichtungen erforderlich.

Aus der WO-A-9601836 ist eine mikroelektronische Vorrichtung bekannt, die ebenfalls eine Vielzahl von Einzelbehältnissen als Probenbehältnisse aufweist, die als Mikrobehältnisse ausschließlich für die Aufnahme geringster Probenmengen geeignet sind. Die bei den Mikrobehältnissen vorgesehenen Elektroden können im wesentlichen nur für Leitfähigkeitsmessungen eingesetzt werden. Die Vorrichtung ist ausgerichtet zur DNA-Untersuchung und es können damit unter anderem keine physiologische Messungen an lebenden Zellen durchgeführt werden.

Aufgabe der vorliegenden Erfindung ist es, eine Vorrichtung der eingangs erwähnten Art zu schaffen, die bei verringertem Gesamtaufwand eine Vielzahl unterschiedlicher Untersuchungen auch mit laufender Kontrolle eines Reaktionsprozesses ermöglicht und die auch einfacher zu handhaben ist.

Zur Lösung dieser Aufgabe wird erfindungsgemäß vorgeschlagen, daß die Meßeinrichtung auf einer oder mehreren Substratplatten befindliche Halbleiter-Sensoren zumindest mit einem Interdigitalkondensator aufweist und daß auf die Halbleiter-Substratplatte eine wabenartige Röhrchenstruktur, bestehend aus einem bodenlosen Oberteil einer handelsüblichen Mikrotiterplatte aufgesetzt und mit der Substratplatte dicht verbunden ist.

Durch die Verwendung eines Mikrotiterplatten-"Oberteiles" können die bisher in Verbindung mit Mikrotiterplatten verwendeten Einrichtungen, insbesondere auch der Beprobungsautomat, weiterverwendet werden. Außerdem kann entsprechend mehr Testflüssigkeit bedarfsweise aufgenommen werden.
Halbleiter-Sensoren bieten eine Vielzahl unterschiedlicher Meßmöglichkeiten, so daß je nach Anwendungsfall und Meßaufgabe entsprechende Sensoren vorgesehen sein können. Solche Sensoren lassen sich auch in kleinster Bauform realisieren, so daß dementsprechend auch mit kleinsten Probenmengen gearbeitet werden kann. Es sind so auch noch Untersuchungen beispielsweise an Zellen möglich, wenn diese bei einem Patienten nur in sehr geringer Menge, zum Beispiel als Biopsiematerial, entnommen werden können. Vorteilhaft ist auch, daß die Aufnahmevorrichtung mit den Einzelbehältnissen und der praktisch integrierten Meßeinrichtung eine komplette Funktionseinheit und auch eine kompakte Baueinheit bilden, die auch einfacher zu handhaben ist. Die Sensoren sind hierbei jeweils Teil der Meßkammern, so daß diese zur Auswertung nicht mehr mit einer separaten Meßeinrichtung in Verbindung gebracht werden müssen. Vorteilhaft ist auch, daß eine Messung während eines laufenden Reaktionsprozesses und dabei die Messung gleichzeitig bei allen Einzelbehältnissen möglich ist.

Mit Hilfe des Interdigitalkondensators als Sensor können sich insbesondere Messungen von Formveränderungen der Zellen durchgeführt werden und außerdem können Impedanz- oder Kapazitätsänderungen der Zellmembran gemessen werden. Auch können Antikörper, die sich an den Zellen anlagern, nachgewiesen werden, da sie die Dielektrizitätskonstante im Bereich der Interdigitalstruktur verändern. Vorzugsweise greifen die Elektroden des Interdigitalkondensators paarig ineinander.

Zweckmäßigerweise sind mehrere, vorzugsweise unterschiedlich große Interdigitalkondensatoren vorgesehen. Diese weisen eine unterschiedliche Empfindlichkeit auf, so daß dementsprechend ein größerer Meßbereich abgedeckt und in den einzelnen Meßbereichen eine höhere Auflösung ermöglicht ist.

Vorzugsweise ist vorgesehen, daß sich die Sensoren zumindest für einige Aufnahmebehältnisse auf einer gemeinsamen, waferartigen Halbleiter-Substratplatte befinden.
Auf einer solchen Halbleiter-Substratplatte lassen sich in bekannter Herstellungstechnik eine Vielzahl von Sensoren auf engem Raum unterbringen, so daß damit eine Voraussetzung für eine besonders kompakte Bauform der Vorrichtung vorhanden ist. Die Halbleiter-Substratplatte mit den einzelnen Sensoren bildet hierbei praktisch eine den Aufnahmebehältnissen zugeordnete Meßstruktur.
Eine bevorzugte Ausführungsform sieht dabei vor, daß die Vorrichtung wenigstens eine Halbleiter-Substratplatte mit einer Vielzahl von darin befindlichen, näpfchenförmigem Aufnahme-Vertiefungen als Behältnisse aufweist und daß die den Vertiefungen zugeordneten, insgesamt eine Meßstruktur bildenden Sensoren Bestandteil der Substratplatte ist.
Insbesondere auch bei dieser Vorrichtung kann mit kleinsten Probenmengen gearbeitet werden. Außerdem läßt sich eine solche Vorrichtung in Halbleitertechnik komplett herstellen. Weiterhin ist damit eine extrem kompakte Bauform realisierbar.

Es können dabei nach einer Weiterbildung der Erfindung auch im Bereich eines Einzelbehältnisses oder einer Aufnahme-Vertiefung mehrere, vorzugsweise unterschiedliche Sensoren insbesondere als Sensorarray vorgesehen sein, so daß gleichzeitig unterschiedliche Parameter während der Untersuchung erfaßt werden können.
Ein solches Sensorarray kann als integrierte Schaltung besonders kostengünstig hergestellt werden und ermöglicht auf engstem Raum die Messung unterschiedlicher chemischer oder biologischer Substanzen.
Je nach Untersuchungsaufgabe besteht aber auch die Möglichkeit, daß bei den einzelnen Aufnahmebehältnissen unterschiedliche Sensoren angeordnet sind, wobei ein oder mehrere Aufnahmebehältnisse in ihrem jeweiligen Bereich gleiche Sensoren haben und bei anderen Aufnahmebehältnissen oder Gruppen von Aufnahmebehältnissen andere Arten von Sensoren vorgesehen sind.

Die Meßeinrichtung mit ihrer Meßstruktur ist zweckmäßigerweise unterseitig der Aufnahmevorrichtung angeordnet und jedes Aufnahmegefäß trägt bodenseitig und/oder in der Seitenwand wenigstens einen Sensor. Bevorzugt ist beziehungsweise sind der oder die Sensoren am Boden der Aufnahmevorrichtung in die Meßstruktur integriert, jedoch können auch an oder in den Seitenwänden der Aufnahmegefäße Sensoren vorgesehen sein. Beispielsweise können bei den Seitenwänden Leitfähigkeitssensoren angeordnet sein.
Bei Untersuchungen an lebenden Zellen mittels Mikrotiterplatten ist ein Temperieren, um die normalen Lebensbedingungen der Zellen sicherzustellen, problematisch. Unter Umständen besteht dabei auch die Gefahr, daß die zu untersuchenden Zellen wegen zu niedriger Temperatur absterben können, so daß das Meßergebnis dann erheblich verfälscht werden kann. Um dies zu vermeiden, wird nach einer Weiterbildung der Erfindung vorgeschlagen, daß die Mikrotiterplatte oder dergleichen unterseitig, vorzugsweise unterseitig der Meßstruktur, eine Temperiereinrichtung aufweist, die vorzugsweise thermostatisch regelbar ist.
Damit lassen sich exakte Temperaturvorgaben einhalten und es sind damit auch Untersuchungen an thermisch empfindlichen Meßobjekten möglich.
Um die Temperatur nahe der Meßstelle erfassen zu können, ist auf dem die Meßstruktur aufweisenden Substrat wenigstens ein Temperaturmeßsensor, insbesondere eine Temperaturmeßdiode angeordnet. Beim Herstellen der Meßstruktur kann ein solcher, gegebenenfalls bei jedem Aufnahmebehältnis vorgesehener Temperaturmeßsensor, mit hergestellt und damit in die Meßstruktur integriert werden.
Gegebenenfalls kann die Wandungsdicke der die Sensoren und gegebenenfalls die Temperiereinrichtung und dergleichen aufweisenden Substratplatte im Bereich der einzelnen Behältnisse reduziert und für ein Durchlicht-Meßverfahren bemessen sein. Dabei besteht auch die Möglichkeit, daß die Substratplatte im Bereich der einzelnen Behältnisse wenigstens einen durchleuchtbaren Kanal aufweist. Dadurch kann gegebenenfalls auch zusätzlich zu der elektrischen oder elektronischen Messung mit der bisher schon verwendeten Durchlichttechnik gearbeitet werden.

Besonders günstig ist es, wenn die Halbleiter-Substratplatte als Meßstruktur wenigstens einen Feldeffekttransistor, insbesondere einen ISFET aufweist, dessen Gate zum Kontakt mit den Zellen freiliegt. Durch den direkten Kontakt des eine Meßelektrode bildenden Gates, ist eine hohe Meßempfindlichkeit vorhanden. Vorteilhaft ist es, wenn in wenigstens einem isolierten Zwischenraum der Elektroden des Interdigitalkondensators eine elektrochemosensitive Schicht vorgesehen ist. Der Sensor ist dann zum Nachweis bestimmter, von den Zellen abgeschiedenen physiologischen Substanzen, beispielsweise Sauerstoff oder komplexe Gase besser geeignet. Hierzu können in den Zwischenräumen elektroaktive Substanzen aufgebracht oder in keramischen Schwämmen verpackt sein.

Bei einer anderen Ausführungsform sind zwischen den Elektroden des Interdigitalkondensators Lichtleiter vorgesehen und zur Aufnahme und zum Nachweis des den jeweiligen Lichtleiter durchlaufenden Lichts sind Lichtdetektoren im Substrat angeordnet. Die Meßeinrichtung stellt dann zusätzliche Informationen über beispielsweise von den Zellen abgegebenes Streulicht zur Verfügung, die einen Rückschluß auf die Vitalität der Zellen ermöglichen. In vorteilhafter Weise kann somit mit Hilfe der Lichtdetektoren ein Selbsttest der Meßeinrichtung durchgeführt werden.

Eine noch exaktere Kontrolle der mit den Meßstrukturen in Kontakt stehenden Zellen wird ermöglicht, wenn in das Substrat CCD-Sensoren, insbesondere in Form einer CCD-Zeile oder eines CCD-Arrays integriert sind. Dadurch wird eine noch höhere Auflösung bei der optischen Messung erreicht, so daß es insbesondere auch möglich ist, morphologische Veränderungen einzelner oder mehrerer, in bestimmten Bereichen der Meßstruktur angeordneter Zellen, zu überwachen.

Zweckmäßigerweise sind die Meßausgänge der auf einem gemeinsamen Substrat angeordneten Sensoren mit einer insbesondere auf dem Substrat integriert angeordneten Steuer- und Auswerteeinrichtung insbesondere über eine Leitungs- oder Leitermatrix verbunden. In der integrierten Steuer- und Auswerteeinrichtung kann beispielsweise eine Vorverarbeitung der Meßwerte vorgenommen werden. Die Auswerteelektronik erlaubt auch ein stoff- und funktionsspezifisches Training des Sensors.
Eine solche Ausführungsform der erfindungsgemäßen Vorrichtung kann bei entsprechender Ausbildung der Steuer- und Auswerteeinrichtung praktisch als Mikrotiterplatten-Asic ausgebildet sein, das an die unterschiedlichsten Meßaufgaben und Auswerteverfahren anpaßbar ist.
Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: einen Teilabschnitt einer erfindungsgemäßen Vorrichtung in Längsschnittdarstellung,
- Fig. 2: eine erfindungsgemäße Vorrichtung in gegenüber Fig. 1 etwas abgewandelter Ausführungsform, ebenfalls als Längsschnitt eines Teilabschnittes,
- Fig. 3: eine Aufsicht einer Aufnahmevorrichtung mit einer Vielzahl von Einzelbehältnissen,
- Fig. 4: eine Aufsicht einer waferartigen Halbleitersubstratplatte mit einer Vielzahl von Sensoren,
- Fig. 5: die in Fig. 3 und 4 gezeigten Elemente vor dem Zusammenfügen, und
- Fig. 6: eine Detail-Ausschnittsdarstellung einer erfindungsgemäßen Vorrichtung in Aufsicht.

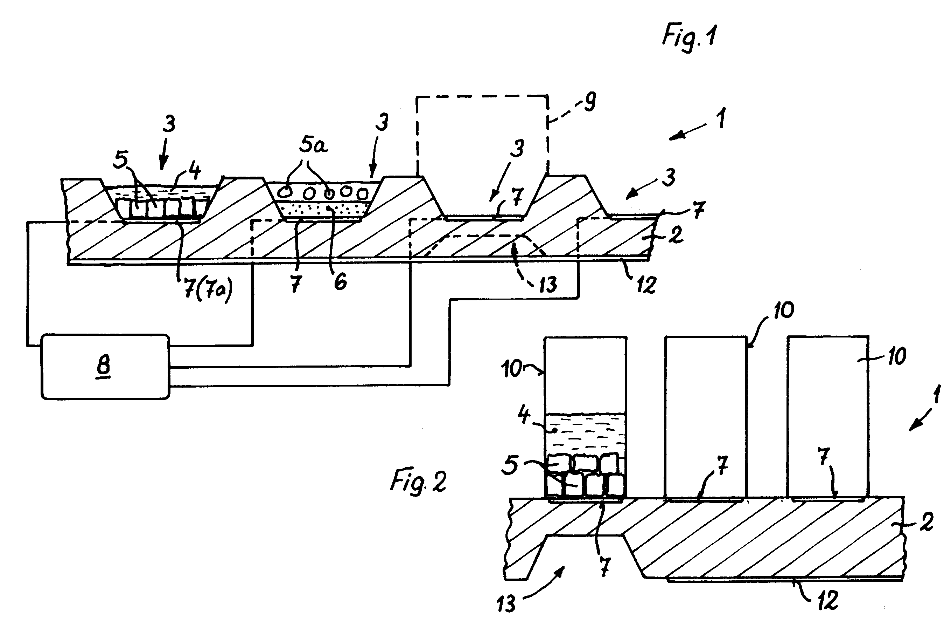

Von einer Vorrichtung 1 zur Durchführung von Untersuchungen an Zellproben ist in Fig. 1 ein im Längsschnitt dargestellter Teilbereich gezeigt. In diesem Ausführungsbeispiel ist eine Halbleiter-Substratplatte 2 mit einer Vielzahl von darin befindlichen, näpfenförmigen Aufnahme-Vertiefungen 3 vorgesehen, die als Behältnisse zur Aufnahme von Zellproben dienen. Zur Verdeutlichung sind in zwei nebeneinander befindlichen Aufnahme-Vertiefungen 3 verschiedene Füllmedien für unterschiedliche Untersuchungen dargestellt. In der linken Vertiefung befinden sich in einem Reagenz 4 Zellen 5 und es kann hierbei eine Chemotherapietestung durchgeführt werden.
In der Aufnahme-Vertiefung 3 daneben befindet sich auf einem Testsubstrat 6, bestehend aus einer Zellschicht oder embryonalen HM-Zellkulturen oder einer Kollagenmatrix, eine Suspension mit Metastasenzellen. Es wird hiermit ein Metastasierungsindex ermittelt.
Um Veränderungen an den Zellen 5 beziehungsweise dem Testsubstrat 6 feststellen zu können, sind im Bodenbereich der Vertiefungen 3 sensoren 7 angeordnet. Als Sensoren 7 können Einzelsensoren, bevorzugt jedoch mehrere unterschiedliche Sensoren 7 als Sensor-Array 7a vorgesehen sein. Es kommen dafür Feldeffekttransistoren, Interdigitalkondensatoren oder dergleichen Halbleiterstrukturen, andererseits auch optische Sensoren, insbesondere Oberflächenwellenleiter, Gitterkoppler und dergleichen in Frage. Wie in Fig. 1 angedeutet, sind die Sensoren 7 mit einer Steuer- und Auswerteeinrichtung 8 verbunden. Gegebenenfalls kann diese Steuer- und Auswerteeinrichtung ganz oder teilweise auf der Halbleiter-Substratplatte 2 integriert sein.
Es besteht dabei auch die Möglichkeit, die Steuer- und Auswerteeinrichtung 8 auf der der Sensorstruktur abgewandten Rückseite der Halbleiter-Substratplatte 2 anzuordnen und über Durchkontaktierungen mit den Sensoranschlüssen zu verbinden. Dadurch ist eine besonders kompakte Ausführung möglich.

Beispielsweise kann die Steuer- und Auswerteeinrichtung 8 einen Multiplexer, einen AD/DA-Wandler mit Sensoransteuerung, einen Mikroprozessor sowie eine IO-Einheit umfassen. Es ist somit eine komplette Untersuchungs-Vorrichtung gebildet, mit der laufend während der Reaktionsprozesse Messungen durchgeführt werden können.
Außer den Sensoren 7 können auch Reizelektroden oder dergleichen vorgesehen sein, um die zu untersuchenden Zellen anzuregen und beispielsweise zur spontanen Abgabe einer mit den Sensoren zu detektierenden Substanz zu veranlassen.
Für die unterschiedlichsten Messungen ist es vorteilhaft, wenn bei jeder Aufnahme-Vertiefung 3 bevorzugt eine Achterstruktur mit vier Feldeffekttransistoren, zwei Interdigitalkondensator und zwei Sauerstoffindikatoren auf einem Sensor-Array 7a vorgesehen sind.

Die in Fig. 1 gezeigte Ausführungsform einer erfindungsgemäßen Vorrichtung 1 läßt sich extrem kompakt aufbauen und eignet sich insbesondere für Untersuchungen an sehr kleinen Probenmengen.

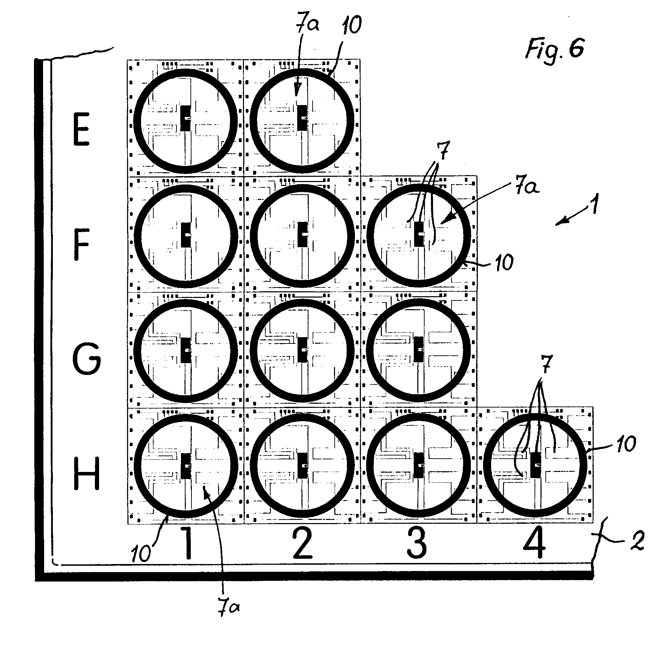

Strichliniert ist in Fig. 1 noch an einer Aufnahme-Vertiefung 3 angedeutet, daß über die Substratplatte 2 überstehende Aufsätze 9 vorgesehen sein können, um das Aufnahmevolumen der Vertiefungen 3 zu vergrößern.
Fig. 2 zeigt eine Ausführungsform mit röhrchenförmigen Einzelbehältnissen 10, die auf eine Halbleiter-Substratplatte 2 aufgesetzt sind. Im Bodenbereich jedes Einzelbehältnisses 10 befinden sich auch hier Sensoren 7.

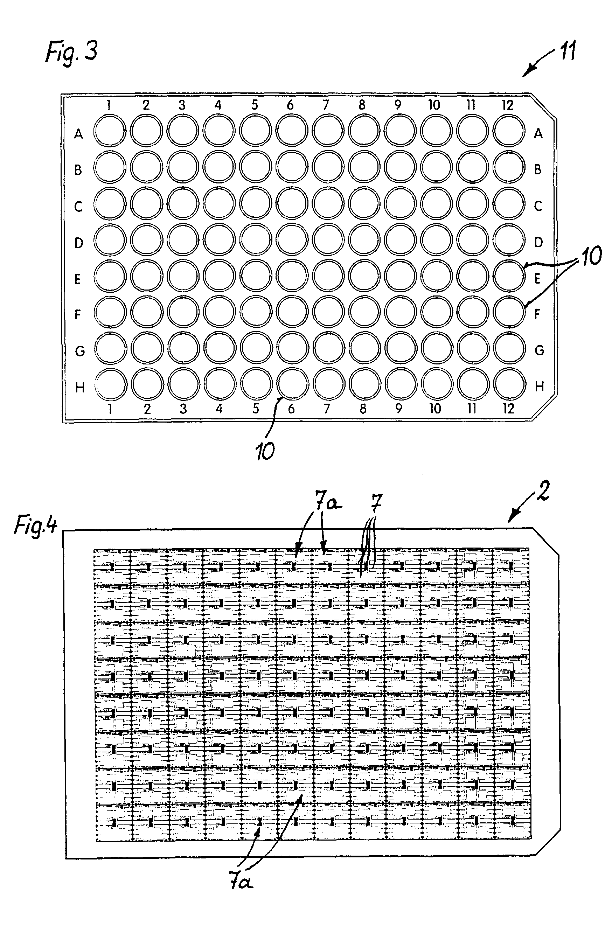

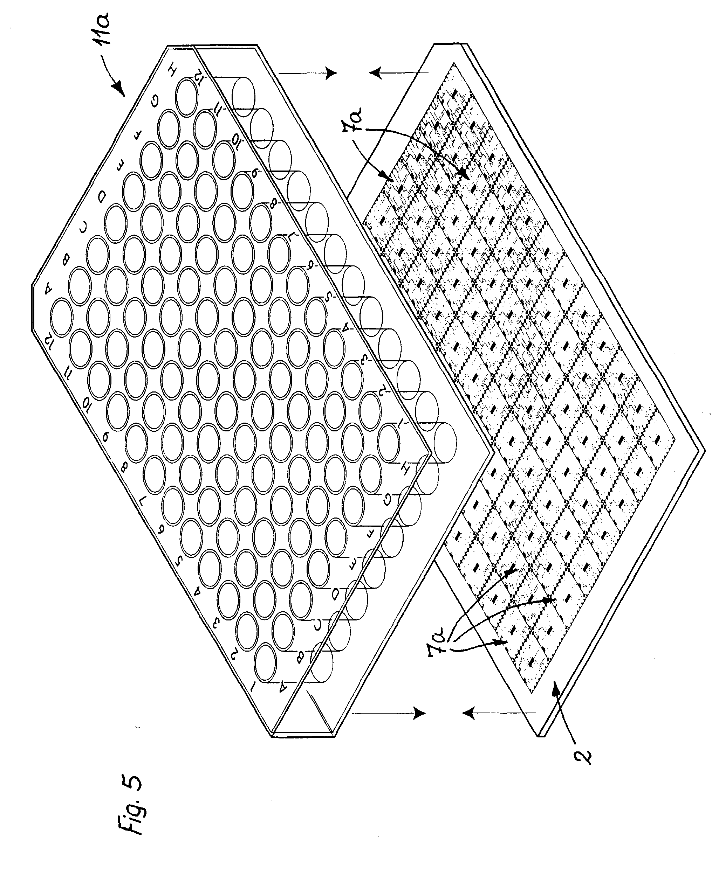

Die Fig. 3 bis 6 zeigen in unterschiedlichen Ansichten die wesentlichen Teile einer erfindungsgemäßen Vorrichtung 1. In dem hier dargestellten Ausführungsbeispiel wird für die Behältnisse 10 von einer handelsüblichen Mikrotiterplatte 11 (Fig. 3) der Bodenbereich abgetrennt, so daß sich durchgängige Röhrchen ergeben. Dieses Mikrotiterplatten-Oberteil lla (Fig. 5) wird dann auf die Substratplatte 2 (Fig. 4) aufgesetzt und vorzugsweise durch Ultraschallschweißen dicht mit dieser verbunden. Die Substratplatte 2 mit den jeweiligen Sensoren bildet dann den Boden der Einzelbehältnisse 10. Die Sensoren oder Sensor-Arrays auf der Substratplatte 2 sind bei Verwendung einer Mikrotiterplatte in dem Abstand der einzelnen Röhrchen oder Einzelbehältnisse angeordnet.
Durch Verwendung eines Mikrotiterplatten-Oberteiles 11a zur Bildung der Aufnahmebehältnisse besteht die Möglichkeit, bisher im Zusammenhang mit handelsüblichen Mikrotiterplatten eingesetzte Apparaturen, beispielsweise einen Beprobungsautomaten, einen Mikroplattenreader und dergleichen unverändert einsetzen zu können.
Wie aus Fig. 4,5 und insbesondere Fig.6 erkennbar, sind die Sensoren 7 durch Sensorarrays 7a mit mehreren, unterschiedlichen Einzelsensoren gebildet. Wie bereits vorerwähnt, könnten sich auf der Substratplatte auch noch Teile oder die gesamte Steuer- und Auswerteeinrichtung 8 befinden. Die Verbindungsleitungen zu den außerhalb von den Meßkammern liegenden Anschlüssen der jeweils einem Einzelbehältnis 10 zugeordneten Sensorarrays 7a sind der Einfachheit halber nicht dargestellt.
Fig. 6 zeigt in einer vergrößerten Aufsicht eine Reihe von nebeneinander angeordneten Sensorarrays 7a mit Behältnissen 10.
Außer elektronischen Sensoren auf Halbleiterbasis können auch noch andere Sensoren, beispielsweise auf optischer Basis oder biologische Sensoren vorgesehen und vorzugsweise in Kombination mit den zuvor beschriebenen Sensoren eingesetzt werden.

In den Ausführungsbeispielen gemäß Fig. 1 und 2 ist unterseitig bei der Halbleiter-Substratplatte 2 eine Heizschicht 12 vorgesehen, mittels der eine Temperierung der Substratplatte und damit auch der in den Aufnahme-Vertiefungen 3 befindlichen Proben möglich ist. Bei Zellproben können so auch bezüglich der Temperatur deren normale Lebensbedingungen geschaffen werden, so daß Untersuchungen über einen längeren Zeitraum möglich sind. Es besteht auch die Möglichkeit, anstatt einer durchgängigen Heizschicht 12 partielle, voneinander getrennte Abschnitte von Heizschichten vorzusehen, um bedarfsweise unterschiedliche Temperaturen in bestimmten Bereichen erzeugen zu können. Zur thermostatischen Regelung der Heizung können an einer oder mehreren Stellen der Substratplatte Temperaturmeßsensoren vorgesehen sein. Solche Temperaturmeßsensoren können auch direkt bei den den einzelnen Aufnahme-Vertiefungen oder dergleichen Einzelbehältnissen zugeordneten Sensoren 7 integriert sein. Temperaturmeßsensoren im Bereich der Einzelbehältnisse können außer zur thermostatischen Regelung einer Heizung auch zum Erfassen der biologischen Aktivität der Zellen verwendet werden. In den Figuren 1 und 2 sind in der Substratplatte 2 unterseitig an zwei Vertiefungen beziehungsweise Einzelbehhältnissen, Ausnehmungen 13 vorgesehen und damit die Wandungsdicke der Substratplatte soweit reduziert, daß hier auch (zusätzlich) mit einem Durchlicht-Meßverfahren gearbeitet werden kann.

## Patentansprüche

1. Vorrichtung zur Durchführung von Untersuchungen an Zellproben und dergleichen Proben, die eine Aufnahmevorrichtung mit einer Vielzahl von Einzelbehältnissen für Zellproben aufweist, sowie mit einer Meßeinrichtung zum Erfassen von Veränderungen an den einzelnen Proben, wobei bei jedem Aufnahmebehältnis (3,10) wenigstens ein Sensor (7) vorgesehen ist, **dadurch gekennzeichnet,** daß die Meßeinrichtung auf einer oder mehreren Substratplatten befindliche Halbleiter-Sensoren (7) zumindest mit einem Interdigitalkondensator aufweist und daß auf die Halbleiter-Substratplatte (2) eine wabenartige Röhrchenstruktur, bestehend aus einem bodenlosen Oberteil (11a) einer handelsüblichen Mikrotiterplatte aufgesetzt und mit der Substratplatte (2) dicht verbunden ist.

2. Vorrichtung nach Anspruch 1, dadurch gekennzeichnet, daß sich die Sensoren zumindest für einige Aufnahmebehältnisse auf einer gemeinsamen, waferartigen Halbleiter-Substratplatte (2) befinden.

3. Vorrichtung nach Anspruch 1 oder 2, dadurch gekennzeichnet, daß bei den einzelnen Aufnahmebehältnissen unterschiedliche Sensoren angeordnet sind.

4. Vorrichtung nach einem der Ansprüche 1 bis 3, dadurch gekennzeichnet, daß die Meßeinrichtung mit einer Meßstruktur unterseitig der Aufnahmevorrichtung angeordnet ist und daß jedes Aufnahmegefäß (3,10) bodenseitig und/oder in der Seitenwand, wenigstens einen Sensor (7) trägt.

5. Vorrichtung nach einem der Ansprüche 1 bis 4, dadurch gekennzeichnet, daß die Mikrotiterplatte oder dergleichen Aufnahmevorrichtung unterseitig, vorzugsweise unterseitig der Substratplatte(n) beziehungsweise der Meßstruktur, eine Temperiereinrichtung (12) aufweist, die vorzugsweise thermostatisch regelbar ist.

6. Vorrichtung nach einem der Ansprüche 1 bis 5, dadurch gekennzeichnet, daß die Halbleiter-Substratplatte (2) mit dem Oberteil (lla) der Mikrotiterplatte durch Ultraschallschweißen dicht verbunden ist.

7. Vorrichtung nach einem der Ansprüche 1 bis 6, dadurch gekennzeichnet, daß sie eine Halbleiter-Substratplatte (2) mit einer Vielzahl von darin befindlichen, näpfchenförmigen Aufnahme-Vertiefungen (3) als Behältnisse aufweist und daß die Meßstruktur mit ihren jeweils einer Vertiefung (3) zugeordneten Sensoren (7) Bestandteil der Substratplatte (2) ist.

8. Vorrichtung nach einem der Ansprüche 1 bis 7, dadurch gekennzeichnet, daß die Wandungsdicke der die Sensoren (7) und gegebenenfalls die Temperiereinrichtung und dergleichen aufweisenden Substratplatte im Bereich der einzelnen Behältnisse reduziert und für ein Durchlicht-Meßverfahren bemessen ist.

9. Vorrichtung nach einem der Ansprüche 1 bis 8, dadurch gekennzeichnet, daß die Substratplatte im Bereich der einzelnen Behältnisse wenigstens einen durchleuchtbaren Kanal aufweist.

10. Vorrichtung nach einem der Ansprüche 1 bis 9, dadurch gekennzeichnet, daß im Bereich eines Einzelbehältnisses (10) oder einer Aufnahme-Vertiefung (3) mehrere, vorzugsweise unterschiedliche Sensoren (7), insbesondere als Sensorarray (7a), vorgesehen sind.

11. Vorrichtung nach einem der Ansprüche 1 bis 10, dadurch gekennzeichnet, daß die Halbleiter-Substratplatte (2) als Meßstruktur wenigstens einen Feldeffekttransistor, insbesondere einen ISFET aufweist, dessen Gate zum Kontakt mit den Zellen freiliegt.

12. Vorrichtung nach einem der Ansprüche 1 bis 11, dadurch gekennzeichnet, daß der als Sensor (7) vorgesehene Interdigitalkondensator vorzugsweise paarig ineinandergreifende Elektroden aufweist.

13. Vorrichtung nach Anspruch 12, dadurch gekennzeichnet, daß mehrere, vorzugsweise unterschiedlich große Interdigitalkondensatoren vorgesehen sind.

14. Vorrichtung nach Anspruch 12 oder 13, dadurch gekennzeichnet, daß in wenigstens einem isolierten Zwischenraum der Elektroden des Interdigitalkondensators eine elektrochemosensitive Schicht vorgesehen ist.

15. Vorrichtung nach einem der Ansprüche 12 bis 14, dadurch gekennzeichnet, daß zwischen den Elektroden des Interdigitalkondensators Lichtleiter vorgesehen sind und daß Lichtdetektoren zur Aufnahme und zum Nachweis des den jeweiligen Lichtleiter durchlaufenden Lichts im Substrat angeordnet sind.

16. Vorrichtung nach einem der Ansprüche 1 bis 15, dadurch gekennzeichnet, daß in das Substrat CCD-Sensoren, insbesondere in Form einer CCD-Zeile oder eines CCD-Arrays integriert sind.

17. Vorrichtung nach einem der Ansprüche 1 bis 16, dadurch gekennzeichnet, daß auf dem die Meßstruktur aufweisenden Substrat (2) wenigstens ein Temperaturmeßsensor, insbesondere eine Temperaturmeßdiode angeordnet ist.

18. Vorrichtung nach einem der Ansprüche 1 bis 17, dadurch gekennzeichnet, daß sich auf der Substratplatte (2) als Steuer- und Auswerteeinrichtung zumindest ein Multiplexer, ein AD/DA-Wandler mit Sensoransteuerung, ein Mikroprozessor sowie eine IO-Einheit befinden.

19. Vorrichtung nach einem der Ansprüche 1 bis 18, dadurch gekennzeichnet, daß als Sensoren (7) optische Sensoren, insbesondere Oberflächenwellenleiter, Gitterkoppler und dergleichen vorgesehen sind.

20. Vorrichtung nach einem der Ansprüche 1 bis 19, dadurch gekennzeichnet, daß die den einzelnen Behältnissen zugeordneten Sensoren über eine Leitungs- oder Leitermatrix mit einer Steuer- und Auswerteeinrichtung verbunden sind, die gegebenenfalls zusammen mit den Sensoren auf einer gemeinsamen Substratplatte angeordnet ist.

## Claims

1. Apparatus for carrying out investigations on cell samples and similar samples, which comprises a holding device having a plurality of individual containers for cell samples, and with a measuring device for detecting changes in the individual samples, each holding container (3, 10) being provided with at least one sensor (7), characterised in that the measuring device comprises semiconductor sensors (7) located on one or more substrate plates, with at least one interdigital capacitor, and in that a honeycomb-shaped tube structure consisting of a bottomless upper part (lla) of a standard commercial microtitre plate is placed on the semiconductor substrate plate (2) and is joined tightly to the substrate plate (2).

2. Apparatus according to claim 1, characterised in that the sensors for at least some of the holding containers are located on a common, wafer-like semiconductor substrate plate (2).

3. Apparatus according to claim 1 or 2, characterised in that different sensors are provided for the individual holding containers.

4. Apparatus according to one of claims 1 to 3, characterised in that the measuring device is disposed with a measuring structure on the underside of the holding device and each holding vessel (3, 10) carries at least one sensor (7) on its base and/or in the side wall.

5. Apparatus according to one of claims 1 to 4, characterised in that the microtitre plate or similar holding device has on its underside, preferably on the underside of the substrate plate(s) or the measuring structure, a temperature control device (12) which is preferably thermostatically regulatable.

6. Apparatus according to one of claims 1 to 5, characterised in that the semiconductor substrate plate (2) is joined tightly to the upper part (lla) of the microtitre plate by ultrasonic welding.

7. Apparatus according to one of claims 1 to 6, characterised in that it comprises a semiconductor substrate plate (2) having a plurality of dish-like holding recesses (3) located therein to act as containers and in that the measuring structure with its sensors (7) each associated with a recess (3) is part of the substrate plate (2).

8. Apparatus according to one of claims 1 to 7, characterised in that the wall thickness of the substrate plate which comprises the sensors (7) and optionally the temperature control device and the like is reduced in the region of the individual containers and is dimensioned for a transmitted light measuring process.

9. Apparatus according to one of claims 1 to 8, characterised in that the substrate plate has at least one channel capable of light transmission in the region of the individual containers.

10. Apparatus according to one of claims 1 to 9, characterised in that a plurality of preferably different sensors (7), particularly in the form of a sensor array (7a), are provided in the region of an individual container (10) or a holding recess (3).

11. Apparatus according to one of claims 1 to 10, characterised in that the semiconductor substrate plate (2) has as the measuring structure at least one field-effect transistor, particularly an ISFET, the gate of which is open for contact with the cells.

12. Apparatus according to one of claims 1 to 11, characterised in that the interdigital capacitor provided as sensor (7) has electrodes which preferably engage in one another in pairs.

13. Apparatus according to claim 12, characterised in that a plurality of interdigital capacitors, preferably of different sizes, are provided.

14. Apparatus according to claim 12 or 13,
characterised in that an electrochemosensitive layer is provided in at least one insulated gap of the electrodes of the interdigital capacitor.

15. Apparatus according to one of claims 12 to 14, characterised in that light guides are provided between the electrodes of the interdigital capacitor and that light detectors for receiving and detecting the light passing through the light guide in question are provided in the substrate.

16. Apparatus according to one of claims 1 to 15, characterised in that CCD sensors, particularly in the form of a CCD line or a CCD array, are integrated in the substrate.

17. Apparatus according to one of claims 1 to 16, characterised in that on the substrate (2) comprising the measuring structure is provided at least one temperature measuring sensor, particularly a temperature measuring diode.

18. Apparatus according to one of claims 1 to 17, characterised in that on the substrate plate (2) there are provided, as control and evaluating means, at least one multiplexer, an AD/DA converter with sensor activation, a microprocessor and an IO unit.

19. Apparatus according to one of claims 1 to 18, characterised in that the sensors (7) provided are optical sensors, particularly surface waveguides, grid couplers and the like.

20. Apparatus according to one of claims 1 to 19, characterised in that the sensors associated with the individual containers are connected, via a conduction or conductor matrix, to control and evaluation means which are optionally mounted together with the sensors on a common substrate plate.

## Revendications

1. Dispositif pour effectuer des analyses sur des échantillons cellulaires et des échantillons semblables, qui comprend une plaque de microtitrage ou un dispositif récepteur analogue possédant un grand nombre de récipients individuels pour échantillons cellulaires, ainsi qu'un dispositif de mesure pour déterminer des changements sur les différents échantillons, avec prévision d'au moins un capteur (7) sur chaque récipient récepteur (3, 10), **caractérisé en ce** que le dispositif de mesure présente des capteurs (7) à semi-conducteurs, avec au moins un condensateur interdigité, se trouvant sur une ou plusieurs plaques-substrats, et que la plaque-substrat (2) à semi-conducteur est surmontée d'une structure en nid d'abeilles de petits tubes, constituée de la partie supérieure (11a), sans fond, d'une plaque de microtitrage courante du commerce, qui est reliée de façon étanche à la plaque-substrat (2).

2. Dispositif selon la revendication 1, caractérisé en ce que les capteurs, tout au moins pour quelques récipients récepteurs, se trouvent sur une plaque-substrat (2) commune, à semi-conducteur, semblable à une tranche ou galette.

3. Dispositif selon la revendication 1 ou 2, caractérisé en ce que des capteurs différents sont disposés sur les récipients récepteurs individuels.

4. Dispositif selon une des revendications 1 à 3, caractérisé en ce que le dispositif de mesure est agencé par une structure de mesure sur le côté inférieur du dispositif récepteur et que chaque récipient récepteur (3, 10) porte au moins un capteur (7) du côté du fond et/ou dans la paroi latérale.

5. Dispositif selon une des revendications 1 à 4, caractérisé en ce que la plaque de microtitrage ou un dispositif récepteur semblable porte, sur son côté inférieur, de préférence sous la ou les plaques-substrats, ou sous la structure de mesure, un dispositif (12) de maintien d'une température modérée, qui est de préférence réglable par thermostat.

6. Dispositif selon une des revendications 1 à 5, caractérisé en ce que la plaque-substrat (2) à semi-conducteur est reliée de façon étanche à la partie supérieure (11a) d'une plaque de microtitrage par soudage par ultrasons.

7. Dispositif selon une des revendications 1 à 6, caractérisé en ce qu'il comporte une plaque-substrat (2) à semi-conducteur avec un grand nombre de creux récepteurs (3) en forme de coupelles se trouvant dans cette plaque et servant de récipients, et que la structure de mesure fait partie, par ses capteurs (7), coordonnés chaque fois à un creux (3), de la plaque-substrat (2).

8. Dispositif selon une des revendications 1 à 7, caractérisé en ce que l'épaisseur de paroi de la plaque-substrat, portant les capteurs (7) et éventuellement le dispositif de maintien d'une température modérée et analogues, est réduite dans la zone des récipients individuels et conçue pour un procédé de mesure à éclairage par transparence.

9. Dispositif selon une des revendications 1 à 8, caractérisé en ce que la plaque-substrat présente au moins un canal pour la transmission de lumière dans la zone des différents récipients.

10. Dispositif selon une des revendications 1 à 9, caractérisé en ce que plusieurs capteurs (7), de préférence différents, sont prévus, en particulier sous la forme d'un système de capteurs (7a), dans la zone d'un récipient individuel (10) ou d'un creux récepteur (3).

11. Dispositif selon une des revendications 1 à 10, caractérisé en ce que la plaque-substrat (2) à semi-conducteur comporte, en tant que structure de mesure, au moins un transistor à effet de champ, en particulier un TEC sensible aux ions, dont la grille est exposée librement en vue du contact avec les cellules.

12. Dispositif selon une des revendications 1 à 11, caractérisé en ce qu'un condensateur interdigité, prévu comme capteur (7), présente des électrodes mutuellement imbriquées, de préférence par paires.

13. Dispositif selon la revendication 12, caractérisé en ce que plusieurs condensateurs interdigités sont prévus, ayant de préférence des grandeurs différentes.

14. Dispositif selon la revendication 12 ou 13, caractérisé en ce qu'une couche électrochimiquement sensible est prévue dans au moins un espace intermédiaire isolé des électrodes du condensateur interdigité.

15. Dispositif selon une des revendications 12 à 14, caractérisé en ce que des conducteurs de lumière sont prévus entre les électrodes du condensateur interdigité et que des détecteurs de lumière sont disposés dans le substrat pour la réception et la détection de la lumière passant par le conducteur de lumière concerné.

16. Dispositif selon une des revendications 1 à 15, caractérisé en ce que des capteurs CCD, en particulier sous la forme d'une barrette CCD ou d'un système CCD, sont intégrés dans le substrat.

17. Dispositif selon une des revendications 1 à 16, caractérisé en ce qu'un capteur de température, en particulier sous la forme d'une diode de mesure de température, est disposé sur le substrat (2) présentant la structure de mesure.

18. Dispositif selon une des revendications 1 à 17, caractérisé en ce que la plaque-substrat (2) porte, en tant que dispositif de commande et d'exploitation, au moins un multiplexeur, un convertisseur AN/NA avec une commande de capteurs, un microprocesseur ainsi qu'une unitée d'entrée-sortie.

19. Dispositif selon une des revendications 1 à 18, caractérisé en ce que les capteurs (7) comprennent des capteurs optiques, en particulier des guides d'ondes de surface, des coupleurs de grilles et analogues.

20. Dispositif selon une des revendications 1 à 19, caractérisé en ce que les capteurs coordonnés aux différents récipients, sont reliés à travers une matrice de lignes ou de conducteurs à un dispositif de commande et d'exploitation qui est disposé, éventuellement ensemble avec les capteurs, sur une plaque-substrat commune.
